# EUROPEAN PATENT APPLICATION

(11) **EP 4 603 934 A1**
(43) Date of publication of application: **20.08.2025**
(21) Application number: 23893188.5
(22) Date of filing: 30.06.2023
(51) Int. Cl.: G05B 23/02

(54) **PERFORMANCE TEST METHOD AND TEST APPARATUS**

(30) Priority: 24.11.2022 CN 202211484341
(71) Applicant: Huawei Technologies Co., Ltd., Shenzhen, Guangdong 518129 (CN)
(72) Inventor: HAN, Xiaoliang, Shenzhen, Guangdong 518129 (CN); FAN, Donglei, Shenzhen, Guangdong 518129 (CN); TANG, Guowang, Shenzhen, Guangdong 518129 (CN); GAO, Lin, Shenzhen, Guangdong 518129 (CN); WANG, Shuqi, Shenzhen, Guangdong 518129 (CN)
(74) Representative: Pfenning, Meinig & Partner mbB
(86) International application number: PCT/CN2023/105350
(87) International publication number: WO 2024/109088

(57) **Abstract**

This application provides a performance test method and a test apparatus. According to the test apparatus, a quantity of users can be increased, and implementation costs of the test apparatus can be reduced. The test apparatus includes a multi-user module, where the multi-user module includes a processing module, a PCIE bridge, and a plurality of terminal interfaces. The PICE bridge is used for communication between the processing module and the plurality of terminal interfaces, one end of the PICE bridge is connected to the processing module, and the PICE bridge includes a plurality of branch nodes. The plurality of branch nodes are connected to the plurality of terminal interfaces in a one-to-one correspondence, and the plurality of terminal interfaces may be connected to a plurality of auxiliary terminals in a one-to-one correspondence.

## Description

This application claims priority to Chinese Patent Application No. 202211484341.1, filed with the China National Intellectual Property Administration on November 24, 2022 and entitled "PERFORMANCE TEST METHOD AND TEST APPARATUS", which is incorporated herein by reference in its entirety.

### TECHNICAL FIELD

This application relates to the communication field, and more specifically, to a performance test method and a test apparatus.

### BACKGROUND

With popularization of wireless fidelity (wireless fidelity, Wi-Fi) technologies, a large quantity of Wi-Fi products are delivered every year. A Wi-Fi protocol is a contention-based protocol. An increase in overlapping basic service set (overlapping basic service set, OBSS) networks in a same area gradually increases a probability of an interference conflict, and deteriorates Wi-Fi user experience. Because a wireless access point (wireless access point, AP) may simultaneously schedule a plurality of terminals, the plurality of terminals need to contend for a channel. An orthogonal frequency division multiple access (orthogonal frequency division multiple access, OFDMA) technology is introduced to Wi-Fi 6, so that channel conflicts can be reduced, and user experience can be improved. However, complex and time-varying interference and simultaneous channel contention by a plurality of users bring challenges to a performance test for Wi-Fi communication.

A current performance test system for Wi-Fi communication includes a multi-user module, a multipath emulator (multipath emulator, MPE) module, an interference module, and a main test box. The multi-user module includes 16 Intelax200 chips, the 16 Intelax200 chips are placed on a same printed circuit board (printed circuit board, PCB), the 16 Intelax200 chips are combined by a power divider and then connected to the MPE module, and the MPE module is connected to the main test box. The multi-user module supports a maximum of 16 users. The multi-user module supports a small quantity of users, and implementation costs are high.

### SUMMARY

This application provides a performance test method and a test apparatus. According to the test apparatus provided in embodiments of this application, a quantity of users can be increased, and implementation costs of the performance test apparatus for Wi-Fi communication can be reduced. According to the performance test method provided in embodiments of this application, throughputs of some users are not 0 Mbps during a multi-user test.

According to a first aspect, a test apparatus is provided, used in a performance test for wireless fidelity communication, including: a multi-user module, where the multi-user module includes a processing module, a PCIE bridge, and a plurality of terminal interfaces. The PICE bridge is used for communication between the processing module and the plurality of terminal interfaces, the PICE bridge is connected to the processing module, and the PICE bridge includes a plurality of branch nodes. The plurality of branch nodes are connected to the plurality of terminal interfaces in a one-to-one correspondence.

Based on the foregoing technical solution, the multi-user module includes the processing module, the PCIE bridge, and the plurality of terminal interfaces. The PCIE bridge is used for the communication between the processing module and the plurality of terminal interfaces, one end of the PICE bridge is connected to the processing module, and the other end of the PICE bridge is connected to the plurality of terminal interfaces. Each terminal interface may be connected to an auxiliary terminal/a user. Therefore, the multi-user module may include a plurality of auxiliary terminals, and the multi-user module has high integration and a low price.

With reference to the first aspect, in some implementations of the first aspect, the plurality of terminal interfaces are connected to a plurality of auxiliary terminals in a one-to-one correspondence. A first branch node is configured to control connection and disconnection of a first branch corresponding to the first branch node, and the first branch includes the first branch node, a first terminal interface connected to the first branch node, and a first auxiliary terminal connected to the first terminal interface. The plurality of branch nodes include the first branch node, the plurality of terminal interfaces include the first terminal interface, and the plurality of auxiliary terminals include the first auxiliary terminal.

With reference to the first aspect, in some implementations of the first aspect, the plurality of auxiliary terminals are connected to a first combiner, and the first combiner is configured to combine M channels of signals into N channels of signals, where M is greater than N, and M and N are positive integers.

With reference to the first aspect, in some implementations of the first aspect, the first combiner is connected to a plurality of first attenuators, and attenuation coefficients of the plurality of first attenuators are adjustable.

With reference to the first aspect, in some implementations of the first aspect, the apparatus further includes: a clock synchronization module, where the clock synchronization module is connected to the multi-user module over a wired network. The clock synchronization module may synchronize a clock of the auxiliary terminal in the multi-user module with a clock of the server, so that a one-way delay of Wi-Fi communication of the auxiliary terminal can be measured.

With reference to the first aspect, in some implementations of the first aspect, the clock synchronization module is connected to a to-be-tested terminal over the wired network. The clock synchronization module may synchronize a clock of the to-be-tested terminal with the clock of the server, so that a one-way delay of Wi-Fi communication of the to-be-tested terminal can be measured.

With reference to the first aspect, in some implementations of the first aspect, the apparatus further includes: a traffic test module, where the traffic test module is connected to the multi-user module over the wired network.

With reference to the first aspect, in some implementations of the first aspect, the traffic test module includes a wired interface and a wireless interface, where the wired interface is configured to transmit a management packet over the wired network, and the wireless interface is configured to transmit a data packet over a wireless fidelity network.

Based on the foregoing solution, the traffic test module may transmit, to the auxiliary terminal in the multi-user module through the wired interface, the management packet used to establish a TCP connection, and the traffic test module may transmit the data packet to the auxiliary terminal through the wireless interface, and measure traffic of the data packet. Separation of a management packet channel and a data packet channel can be implemented, and a failure in establishing a TCP link between the auxiliary terminal and the server in a multi-user scenario can be avoided, so that a case in which traffic of service data of the some users is 0 Mbps during the multi-user test can be avoided.

With reference to the first aspect, in some implementations of the first aspect, the apparatus further includes: an interference module, where the interference module includes a plurality of interference wireless access points APs, and the plurality of interference APs are configured to perform wireless fidelity communication with the plurality of auxiliary terminals in the multi-user module. In this embodiment of this application, the interference module includes the plurality of interference APs, the plurality of interference APs may provide a plurality of channels of Wi-Fi interference, and the Wi-Fi interference sent by the interference APs makes a conflict concession.

With reference to the first aspect, in some implementations of the first aspect, at least one parameter in bandwidths, rates, air interface contention parameters, air interface contention frequencies, channels, or signal strengths of the plurality of interference APs is configurable.

With reference to the first aspect, in some implementations of the first aspect, the plurality of interference APs are connected to a plurality of second attenuators, and attenuation coefficients of the plurality of second attenuators are adjustable.

With reference to the first aspect, in some implementations of the first aspect, the plurality of second attenuators are connected to a second combiner, and the second combiner is configured to combine M channels of signals into N channels of signals.

With reference to the first aspect, in some implementations of the first aspect, the apparatus further includes: a multi-functional module, where the multi-functional module includes a plurality of mesh APs, and the plurality of mesh APs are configured to perform wireless fidelity communication with the plurality of auxiliary terminals in the multi-user module.

With reference to the first aspect, in some implementations of the first aspect, the mesh AP is connected to a third attenuator, and an attenuation coefficient of the third attenuator is adjustable.

With reference to the first aspect, in some implementations of the first aspect, the plurality of mesh APs are APs capable of forming a mesh network, and the mesh network is formed by the plurality of mesh APs via a network cable, an optical fiber, or a power line, or through a wireless connection.

Based on the foregoing solution, a design of the multi-functional module can implement delay and throughput tests in a mesh relay scenario and a mesh roaming scenario. Therefore, according to the test apparatus provided in this embodiment of this application, performance of the mesh network formed by the mesh AP can be measured.

According to a second aspect, a performance test method is provided, applied to a performance test for wireless fidelity communication. The method includes: A client sends a management packet to a server over a wired network, where the management packet is used to establish a TCP connection between the client and the server; the client sends a data packet to the server through an AP; and the server measures traffic of the data packet by using a traffic measurement module, where the server includes the traffic measurement module.

Based on the foregoing technical solution, the client and the server are connected over the wired network, the client may send, to the server over the wired network, the management packet used to establish the TCP connection, and the data packet is transmitted between the client and the server over a wireless fidelity network. Separation of a management packet channel and a data packet channel can be implemented, and that a throughput of the client is 0 Mbps caused by a failure in establishing a TCP link between the client and the server can be avoided.

With reference to the second aspect, in some implementations of the second aspect, the method further includes: The server obtains a source IP address and a source port number of the client.

With reference to the second aspect, in some implementations of the second aspect, the client and the server include a clock synchronization module; and the method further includes: The clock synchronization module synchronizes a clock of the server with a clock of the client over the wired network.

With reference to the second aspect, in some implementations of the second aspect, the method further includes: The server measures a one-way delay of the data packet. Because the clocks of the client and the server are synchronized, a round-trip delay of the data packet transmitted between the server and the client can be measured, and the one-way delay of the data packet transmitted between the server and the client can be measured.

According to a third aspect, a test device is provided, including a processor and a transceiver. The transceiver is configured to: receive computer code or instructions and transmit the computer code or the instructions to the processor, and the processor runs the computer code or the instructions, to implement the method according to any one of the possible implementations of the second aspect.

According to a fourth aspect, a computer-readable storage medium is provided, storing a computer program. When the computer program is executed by a test apparatus, the test apparatus is enabled to implement the method according to any one of the possible implementations of the second aspect.

According to a fifth aspect, a computer program product is provided. When the computer program product is run on a computer, the computer is enabled to perform the method according to any one of the possible implementations of the second aspect.

### BRIEF DESCRIPTION OF DRAWINGS

FIG. 1 is a diagram of a performance test system for Wi-Fi communication;
FIG. 2 is a diagram of a multi-user module in a performance test system for Wi-Fi communication;
FIG. 3 is a diagram of a test apparatus according to an embodiment of this application;
FIG. 4 is a diagram of a PC in a multi-user module according to an embodiment of this application;
FIG. 5 is a diagram in which a clock synchronization module in a test apparatus is connected to a terminal over a wired network according to an embodiment of this application;
FIG. 6 is a diagram in which a traffic test module is connected to a plurality of auxiliary terminals in a multi-user module over a wired network;
FIG. 7 is a diagram of an interference module in a test apparatus according to an embodiment of this application;
FIG. 8 is a diagram of a multi-functional module and an interference module in a test apparatus according to an embodiment of this application;
FIG. 9 is a diagram of a structure of a test apparatus according to an embodiment of this application;
FIG. 10 is a schematic interaction flowchart of a performance test method according to an embodiment of this application; and
FIG. 11 is a diagram of a structure of a test device according to an embodiment of this application.

### DESCRIPTION OF EMBODIMENTS

The following describes technical solutions of this application with reference to accompanying drawings.

With popularization of Wi-Fi technologies, a large quantity of Wi-Fi products are delivered every year. A Wi-Fi protocol is a contention-based protocol. An increase in OBSS networks in a same area gradually increases a probability of an interference conflict, and deteriorates Wi-Fi user experience. Because an AP may simultaneously schedule a plurality of terminals, the plurality of terminals need to contend for a channel. An OFDMA technology is introduced to Wi-Fi 6, so that channel conflicts can be reduced, and user experience can be improved. However, complex and time-varying interference and simultaneous channel contention by a plurality of users bring challenges to a Wi-Fi performance test. A current Wi-Fi performance test system has problems such as single interference and a small quantity of supported users.

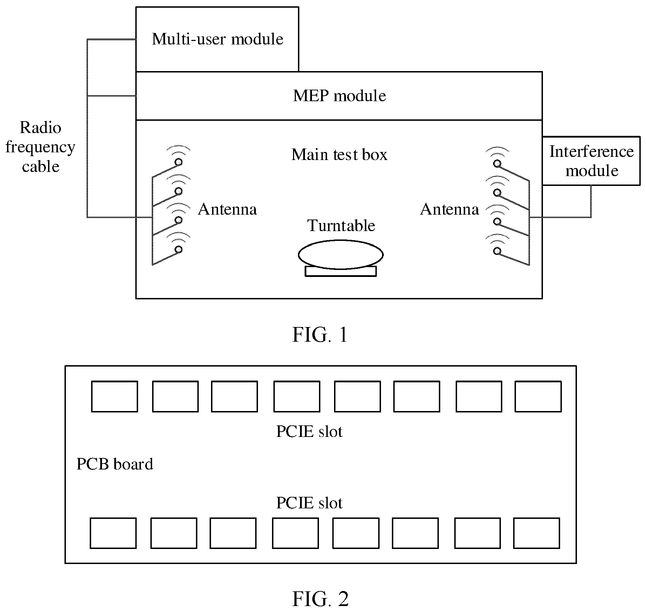

FIG. 1 is a diagram of a performance test system for Wi-Fi communication. The test system includes a multi-user module, an MPE module, an interference generator module, and a main test box. The main test box includes a turntable, and the turntable is configured to place a to-be-tested AP or a to-be-tested terminal. The MPE module has a built-in attenuator, and the MPE module is configured to simulate a path channel between the multi-user module and the main test box. The test system can test a signal peak value, rate versus range (rate versus range, RVR), anti-interference, and directivity of a single user, and test throughputs and delays of fewer than 16 users.

The interference generator module of the performance test system for the Wi-Fi communication may be referred to as an interference module for short. The interference module captures an interference packet in another environment by using an interference recording principle, and then imports the captured interference packet to an Igen module for playback. However, no conflict concession is made on the interference packet that is played back, which does not meet a Wi-Fi protocol requirement.

FIG. 2 is a diagram of a multi-user module in a performance test system for Wi-Fi communication. The multi-user module is the multi-user module in FIG. 1. The multi-user module includes 16 Intelax200 chips, the 16 Intelax200 chips are placed on a same PCB board by using peripheral component interconnect express (peripheral component interconnect express, PCIE) slots, and the 16 Intelax200 chips are combined by a power divider and then connected to the MPE module. Because the multi-user module supports a maximum of 16 users, the multi-user module supports a small quantity of users.

A data measurement module is deployed on the multi-user module, the to-be-tested terminal, and a personal computer (personal computer, PC)/server. The data measurement module uses open-source tools iperf2 and iperf3, and during a Wi-Fi performance test, test results of the iperf2 and the iperf3 are likely to be 0 Mbps. Especially in a multi-user scenario, throughputs of several users are often 0 Mbps. Because air interface transmission is unreliable transmission, a synchronization (synchronization, SYC) packet used to establish a transmission control protocol (transmission control protocol, TCP) connection may be lost on an air interface, resulting in a failure in establishing a TCP link. Especially in the multi-user scenario, different users contend for air interface resources, which aggravates a possibility of an SYC packet transmission failure.

The performance test system for the Wi-Fi communication has the following disadvantages: (1) User integration of the multi-user module is low and a price is high; (2) the test system has a drawback, that is, the throughputs of some users are 0 Mbps during a multi-user test; and (3) the interference module generates only one channel of interference, and the Wi-Fi interference sent by the interference module does not make a conflict concession, which is inconsistent with actual Wi-Fi interference.

In view of this, embodiments of this application provide a test apparatus, used in a performance test for wireless fidelity communication, so that a quantity of users can be increased, and costs of the performance test apparatus for the Wi-Fi communication can be reduced.

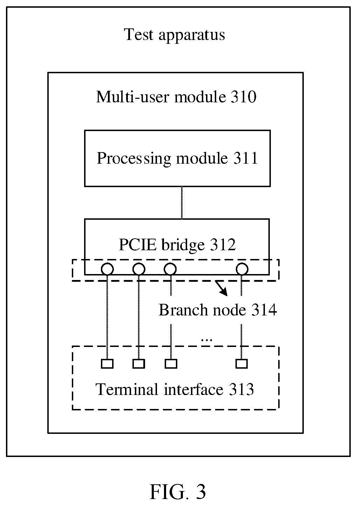

FIG. 3 is a diagram of a test apparatus according to an embodiment of this application. The test apparatus includes a multi-user module 310. The multi-user module 310 includes a processing module 311, a PCIE bridge 312, and a plurality of terminal interfaces 313. The PCIE bridge 312 is used for communication between the processing module 311 and the plurality of terminal interfaces 313, the PICE bridge 312 is connected to the processing module 311, the PICE bridge 312 includes a plurality of branch nodes 314, and the plurality of branch nodes 314 are connected to the plurality of terminal interfaces 313 in a one-to-one correspondence. It may be understood as that one end of the PICE bridge 312 is connected to the processing module 311, and the other end of the PICE bridge 312 is connected to the plurality of terminal interfaces 313. The processing module 311 may be a central processing unit (central processing unit, CPU), and the terminal interface may be an M.2 interface, or may be a PCIE X1 interface.

Optionally, the plurality of terminal interfaces are connected to a plurality of auxiliary terminals in a one-to-one correspondence, and the multi-user module further includes the plurality of auxiliary terminals. A first branch node in the plurality of branch nodes is configured to control connection and disconnection of a first branch corresponding to the first branch node, and the first branch includes the first branch node, a first terminal interface connected to the first branch node, and a first auxiliary terminal connected to the first terminal interface. The plurality of terminal interfaces include the first terminal interface, and the plurality of auxiliary terminals include the first auxiliary terminal.

Optionally, the plurality of auxiliary terminals are connected to a first combiner, and the first combiner is configured to combine M channels of signals into N channels of signals, where M is greater than N, and M and N are positive integers. Optionally, the first combiner is connected to a plurality of first attenuators, and an attenuation coefficient of each of the plurality of first attenuators is adjustable. A signal strength of a signal generated by the auxiliary terminal may be adjusted by adjusting the attenuation coefficient of the first attenuator. A quantity of first attenuators is less than or equal to N. For example, M=12 and N=4. The first combiner may combine 12 channels of signals into four channels of signals, and every two of the four channels of signals combined by the first combiner may be connected to one first attenuator, or each of the four channels of signals combined by the first combiner may be connected to one first attenuator.

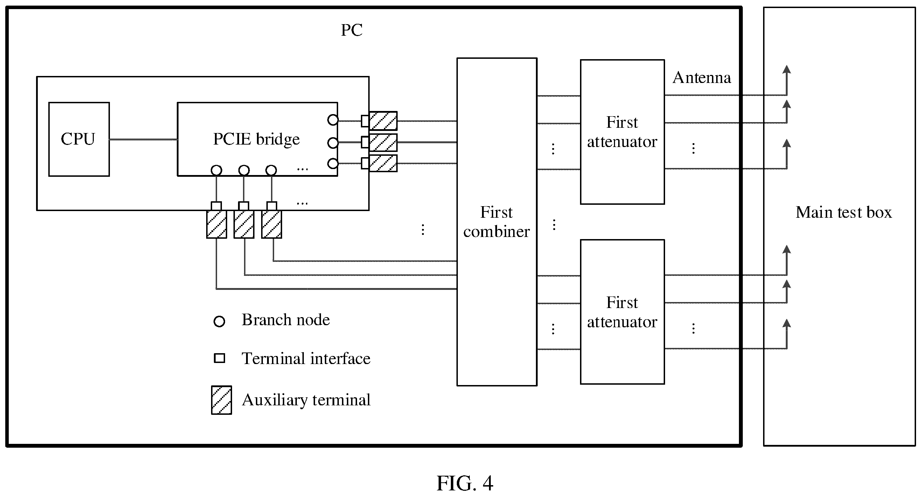

For example, the multi-user module includes a plurality of PCs, each PC includes the processing module, the PCIE bridge, and the plurality of terminal interfaces, and each terminal interface is connected to an auxiliary terminal. FIG. 4 is a diagram of a PC in a multi-user module according to an embodiment of this application. For example, the processing module is the CPU. The CPU is connected to the PICE bridge. The plurality of branch nodes included in the PICE bridge are connected to the plurality of terminal interfaces in a one-to-one correspondence, and the plurality of terminal interfaces are connected to the plurality of auxiliary terminals in a one-to-one correspondence. The plurality of auxiliary terminals are connected to the first combiner, and the first combiner is connected to the plurality of first attenuators. The plurality of auxiliary terminals may lead generated signals into a main test box through the first combiner, the plurality of first attenuators whose attenuation coefficients are adjustable, and antennas. The main test box is configured to place a to-be-tested terminal or a to-be-tested AP.

In the technical solution provided in embodiments of this application, the multi-user module includes the processing module, the PCIE bridge, and the plurality of terminal interfaces. The PCIE bridge is used for the communication between the processing module and the plurality of terminal interfaces, one end of the PICE bridge is connected to the processing module, and the other end of the PICE bridge is connected to the plurality of terminal interfaces. Each terminal interface may be connected to an auxiliary terminal/a user. Therefore, the multi-user module may include the plurality of auxiliary terminals, and the multi-user module has high integration and a low price.

In an implementation, the test apparatus further includes a clock synchronization module. The clock synchronization module is connected to the multi-user module over a wired network, the clock synchronization module is installed on a server/host computer, and the clock synchronization module may be implemented in a software manner. The clock synchronization module is configured to synchronize, over the wired network, clocks of the plurality of auxiliary terminals with the clock of the server/host computer on which the clock synchronization module is installed. The wired network in embodiments of this application is used to transmit a management packet.

Optionally, the clock synchronization module is connected to the to-be-tested terminal in the main test box over the wired network. The clock synchronization module is further configured to synchronize, over the wired network, a clock of a to-be-tested terminal with the clock of the server/host computer on which the clock synchronization module is installed.

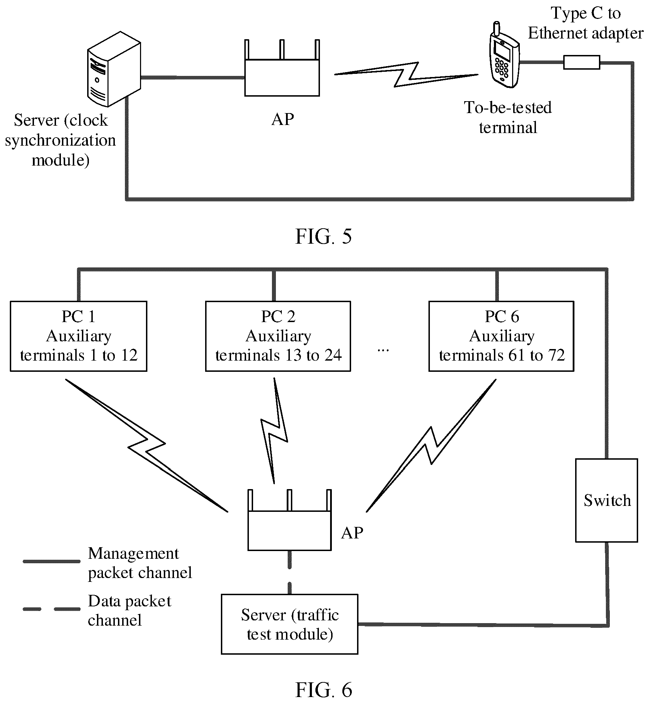

FIG. 5 is a diagram in which the clock synchronization module in the test apparatus is connected to the to-be-tested terminal over the wired network according to an embodiment of this application. For example, the clock synchronization module is installed on the server. The to-be-tested terminal may establish, by using a Type C to Ethernet adapter, a wired network with the server on which the clock synchronization module is installed. The clock synchronization module may synchronize, over the wired network, the clock of the to-be-tested terminal with the clock of the server, to measure a one-way delay and a round-trip delay between the to-be-test terminal and the server. The server and the AP are also connected over the wired network, and the AP communicates with the to-be-tested terminal through Wi-Fi.

Therefore, the test apparatus provided in embodiments of this application can measure the round-trip delay of Wi-Fi communication of the auxiliary terminal/to-be-tested terminal, and measure the one-way delay of the Wi-Fi communication of the auxiliary terminal/to-be-tested terminal.

In an implementation, the test apparatus further includes a traffic test module. The traffic test module is installed on the server/host computer, the traffic test module is connected to the multi-user module over the wired network, and the traffic test module is configured to measure traffic of service data from the plurality of auxiliary terminals in the multi-user module.

Optionally, the traffic test module is connected to the to-be-tested terminal in the main test box over the wired network, and the traffic test module is further configured to measure traffic of service data from the to-be-tested terminal.

For example, the traffic test module includes a wired interface and a wireless interface. The wired interface is configured to transmit a management packet over the wired network, and the wireless interface is configured to transmit a data packet over a wireless fidelity network.

FIG. 6 is a diagram in which the traffic test module is connected to the plurality of auxiliary terminals in the multi-user module over the wired network. For example, the multi-user module includes six PCs, each PC includes the processing module, the PCIE bridge, and 12 terminal interfaces, and each terminal interface is connected to an auxiliary terminal. The multi-user module includes 72 auxiliary terminals in total. The wired interface of the traffic test module is configured to transmit the management packet to the auxiliary terminal in the multi-user module over the wired network, and the wireless interface of the traffic test module is configured to transmit the data packet to the auxiliary terminal over the wireless fidelity network. It should be understood that the multi-user module in this embodiment of this application may alternatively include more than six PCs. This is not specifically limited.

In embodiments of this application, the auxiliary terminal/to-be-tested terminal may be connected, over the wired network, to the server including the traffic test module. The management packet used to establish a TCP connection is transmitted between the auxiliary terminal/to-be-tested terminal and the server/traffic test module over the wired network, and the data packet is transmitted between the auxiliary terminal/to-be-tested terminal and the server/traffic test module over the wireless fidelity network, so that separation of a management packet channel and a data packet channel can be implemented, and a failure in establishing a TCP link between the auxiliary terminal/to-be-tested terminal and the server/traffic test module can be avoided in a multi-user scenario. Therefore, that traffic of service data of some users is 0 Mbps during a multi-user test can be avoided, thereby improving robustness of a multi-user test scenario.

In embodiments of this application, the traffic test module connected to the multi-user module or the to-be-tested terminal over the wired network may be referred to as a first traffic test module. For example, the clock synchronization module and the first traffic test module may be deployed in a same server/host computer, or may be deployed in different servers/host computers.

Optionally, the to-be-tested terminal includes a second traffic test module, and the second traffic test module is configured to measure traffic of service data from the server/host computer. Optionally, the auxiliary terminal includes a third traffic test module, and the third traffic test module is configured to measure the traffic of the service data from the server/host computer.

In an implementation, the test apparatus further includes an interference module. The interference module includes a plurality of interference APs, and the plurality of interference APs are configured to perform wireless fidelity communication with the plurality of auxiliary terminals in the multi-user module.

Optionally, at least one parameter in bandwidths, rates, air interface contention parameters, air interface contention frequencies, channels, or signal strengths of the plurality of interference APs is configurable/adjustable, complex interference in scenarios such as a home, an office area, an airport, and a railway station may be simulated, and Wi-Fi interference sent by the plurality of interference APs makes a conflict concession, which is consistent with actual Wi-Fi interference. The air interface contention frequency of the interference AP may be understood as maximum traffic of service data that can be supported by the interference AP. The air interface contention parameter includes parameters such as an arbitration interframe spacing number (arbitration interframe spacing number, AIFSN), a minimum contention window (minimum contention window), a maximum contention window (maximum contention window), and a transmit opportunity (transmit opportunity).

Optionally, the plurality of interference APs are connected to a plurality of second attenuators, and attenuation coefficients of the plurality of second attenuators are adjustable. A signal strength of a signal generated by the interference AP connected to the second attenuator may be adjusted by adjusting the attenuation coefficient of the second attenuator, and a quantity of the plurality of second attenuators is less than or equal to a quantity of the plurality of interference APs. Optionally, the plurality of attenuators are connected to a second combiner, and the second combiner is configured to combine M channels of signals into N channels of signals.

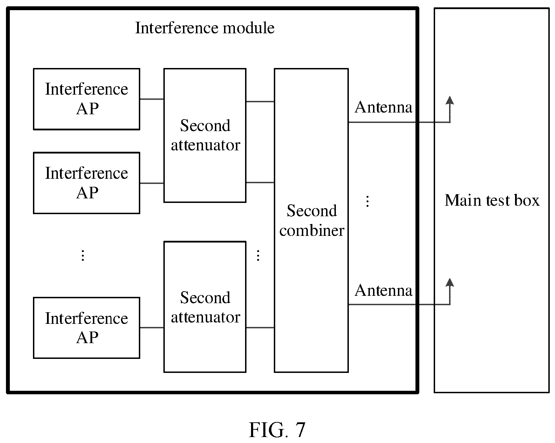

FIG. 7 is a diagram of the interference module in the test apparatus according to an embodiment of this application. The plurality of interference APs are connected to the plurality of second attenuators, and the attenuation coefficients of the plurality of second attenuators are adjustable. The plurality of second attenuators are connected to the second combiner. The plurality of interference APs may lead generated signals into the main test box through the plurality of second attenuators whose attenuation coefficients are adjustable, the second combiner, and antennas, so that the wireless fidelity communication can be performed between the auxiliary terminal in the multi-user module and the interference AP. In embodiments of this application, the interference module includes the plurality of interference APs, the plurality of interference APs may provide a plurality of channels of Wi-Fi interference, and the Wi-Fi interference sent by the interference APs makes the conflict concession.

In an implementation, the test apparatus further includes a multi-functional module. The multi-functional module includes a plurality of mesh (mesh) APs, and the plurality of mesh APs are configured to perform wireless fidelity communication with the plurality of auxiliary terminal interfaces in the multi-user module. The plurality of mesh APs are APs capable of forming a mesh network, and the mesh network is formed by the plurality of mesh APs via a network cable, an optical fiber, or a power line, or through a wireless/Wi-Fi connection.

Optionally, the mesh AP is connected to a third attenuator, and an attenuation coefficient of the third attenuator is adjustable. A signal strength of a signal generated by the mesh AP connected to the third attenuator may be adjusted by adjusting the attenuation coefficient of the third attenuator.

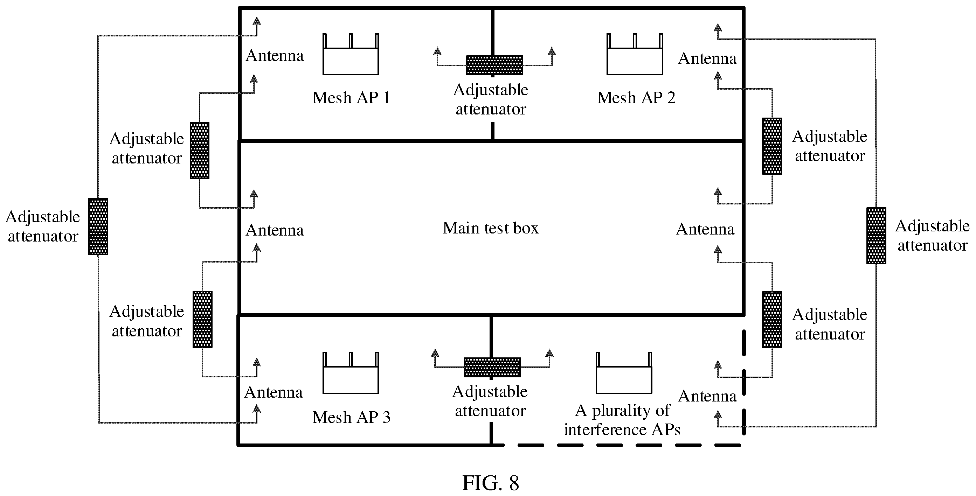

FIG. 8 is a diagram of the multi-functional module and the interference module in the test apparatus according to an embodiment of this application. For example, the mesh APs include a mesh AP 1, a mesh AP 2, and a mesh AP 3. The mesh AP 1, the mesh AP 2, and the mesh AP 3 may lead signals into the main test box through the adjustable third attenuator and antennas, so that the wireless fidelity communication is performed between the auxiliary terminal in the multi-functional module and the mesh AP. Each mesh AP is placed in a multi-functional box. Each multi-functional box has a 10 Gbps Ethernet port and waveguide tube. This improves diversity of mesh networking and covers application scenarios such as Wi-Fi mesh networking, network cable networking, power line networking, and optical fiber networking.

A design of the multi-functional module can implement delay and throughput tests in a mesh relay scenario and a mesh roaming scenario. For example, the relay scenario is mesh AP 1-Wi-Fi-mesh AP 2-Wi-Fi-auxiliary terminal. In the relay scenario, delay and throughput performance of data transmission between the auxiliary terminal and the mesh AP 1 may be tested. For another example, in the mesh roaming scenario, the auxiliary terminal may roam from the mesh AP 1 to the mesh AP 3, and changes of signal strengths of Wi-Fi communication between the auxiliary terminal and different mesh APs may be measured by adjusting the attenuation coefficient of the third attenuator. Therefore, according to the test apparatus provided in embodiments of this application, performance of the mesh network formed by the mesh AP can be measured.

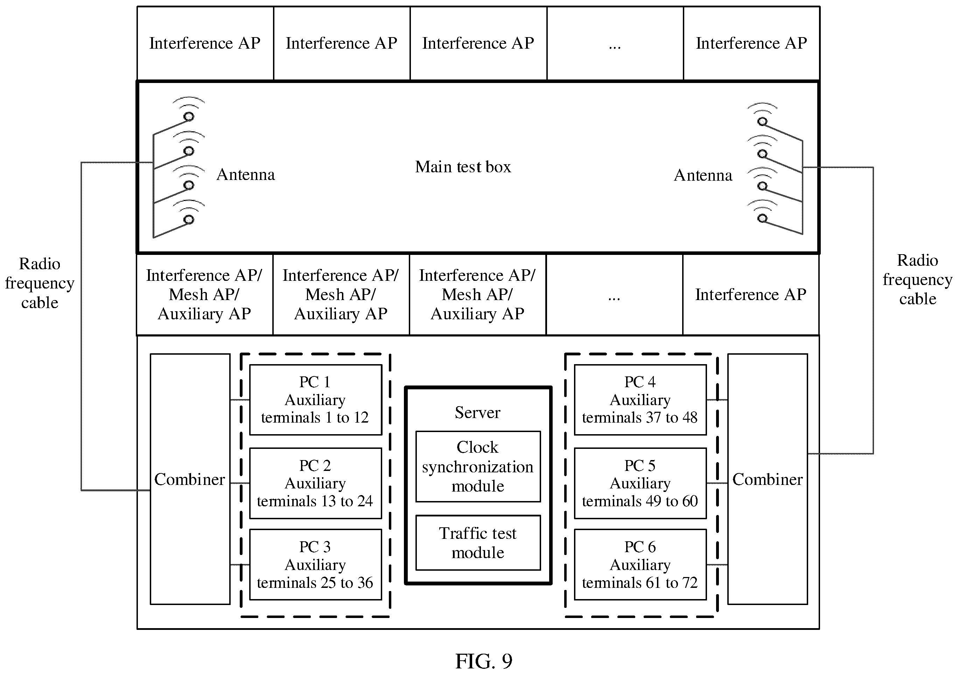

FIG. 9 is a diagram of a structure of a test apparatus according to an embodiment of this application. The test apparatus includes a multi-user module, a clock synchronization module, a traffic test module, a main test box, an interference module, and a multi-functional module. For example, the multi-user module includes six PCs, each PC includes a processing module, a PCIE bridge, and 12 terminal interfaces, and each terminal interface is connected to an auxiliary terminal. The multi-user module includes 72 auxiliary terminals in total. The clock synchronization module and the traffic test module are deployed in a same server, and the server is connected to the multi-user module over a wired network. The main test box is configured to place a to-be-tested device, and the to-be-tested device includes a to-be-tested AP or a to-be-tested terminal. The interference module includes a plurality of interference APs, and the plurality of interference APs are configured to perform wireless fidelity communication with the plurality of auxiliary terminals. The multi-functional module includes a plurality of mesh APs, the plurality of mesh APs may form a mesh network, and the plurality of mesh APs are configured to perform wireless fidelity communication with the plurality of auxiliary terminals. The multi-functional module may further include a plurality of auxiliary APs, and the auxiliary AP is configured to perform wireless fidelity communication with the to-be-tested terminal. It should be understood that the multi-user module in this embodiment of this application may alternatively include more than 72 auxiliary terminals. This is not specifically limited.

When the to-be-tested device in the main test box is the to-be-tested terminal, the to-be-tested terminal communicates with at least one of the plurality of auxiliary APs in the multi-functional module through wireless fidelity, and the plurality of interference APs may communicate with the plurality of auxiliary terminals through the wireless fidelity.

When the to-be-tested device in the main test box is the to-be-tested AP, the to-be-tested AP communicates with at least one first auxiliary terminal in the plurality of auxiliary terminals through wireless fidelity, and the plurality of interference APs communicate with at least one second auxiliary terminal in the plurality of auxiliary terminals through the wireless fidelity.

When performance of the mesh network formed by the plurality of mesh APs is a test object, the plurality of mesh APs are configured to perform wireless fidelity communication with the plurality of auxiliary terminals, and the plurality of interference APs communicate with the plurality of auxiliary terminals through wireless fidelity.

An embodiment of this application proposes a performance test method, applied to a performance test for wireless fidelity communication. According to the method, a failure in establishing a TCP link between a client and a server can be avoided, so that throughputs of some users are not 0 Mbps during a multi-user test.

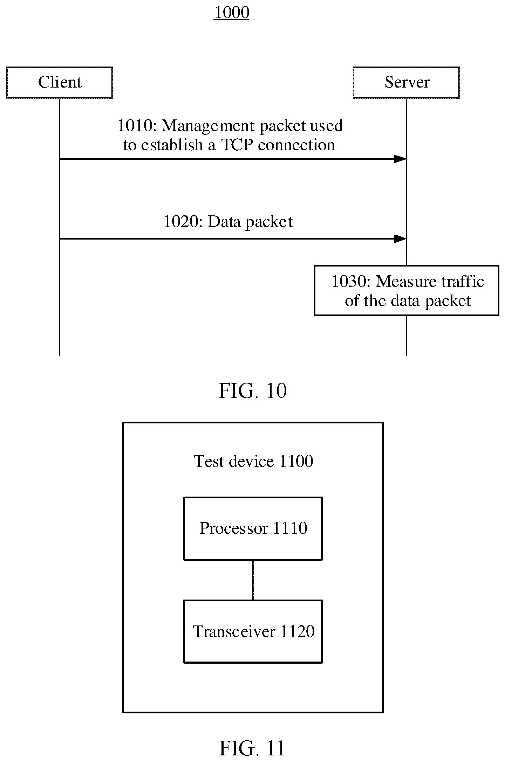

FIG. 10 is a schematic interaction flowchart of a performance test method 1000 according to an embodiment of this application. A client in this embodiment of this application may be the foregoing to-be-tested terminal or auxiliary terminal, a server may be the foregoing server/host computer, and the server includes a traffic measurement module.

1010: The client sends a management packet to the server over a wired network, where the management packet is used to establish a TCP connection between the client and the server, and the client and the server are connected over the wired network. Correspondingly, the server receives the management packet from the client over the wired network, and the client and the server may establish the TCP connection based on the management packet.

1020: The client sends a data packet to the server through an AP, where the data packet includes service data. Correspondingly, the server receives the data packet from the client.

Optionally, the server obtains a source IP address and a source port number of the client. The server receives the data packet from the client based on the source IP address and the source port number of the client. For example, the source IP address and the source port number of the client may be provided by a tester for the server.

1030: The server measures traffic of the data packet from the client by using the traffic measurement module.

Optionally, the server and the client further include a clock synchronization module, and the clock synchronization module synchronizes a clock of the server with a clock of the client over the wired network. After the clock of the server is synchronized with the clock of the client, the server may measure a one-way delay of the data packet from the client.

In this embodiment of this application, the client and the server are connected over the wired network, the client may send, to the server over the wired network, the management packet used to establish the TCP connection, and the data packet is transmitted between the client and the server over a wireless fidelity network. Separation of a management packet channel and a data packet channel can be implemented, and that a throughput of the client is 0 Mbps caused by a failure in establishing a TCP link between the client and the server can be avoided.

An embodiment of this application provides a test device. FIG. 11 is a diagram of a structure of a test device 1100 according to an embodiment of this application.

The device 1100 includes a processor 1110 and a transceiver 1120. The transceiver 1120 is configured to: receive computer code or instructions, and transmit the computer code or the instructions to the processor 1110. The processor 1110 runs the computer code or the instructions, for example, the method in any possible implementation of embodiments of this application.

The processor 1110 may be an integrated circuit chip and has a signal processing capability. In an implementation process, the steps in the foregoing method embodiments can be implemented by using a hardware integrated logical circuit in the processor, or by using the instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

An embodiment of this application further provides a computer-readable storage medium. The computer-readable storage medium stores a computer program used to implement the method in the foregoing method embodiments. When the computer program is run on a computer or a processor, the computer or the processor is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is connected to a memory, the memory is configured to store a computer program, and the processor is configured to execute the computer program stored in the memory, to enable the chip to perform the method in the foregoing method embodiments.

It should be understood that, in embodiments of this application, numbers "first", "second", and the like are merely used to distinguish between different objects, for example, to distinguish between traffic test modules, and do not constitute a limitation on the scope of embodiments of this application. Embodiments of this application are not limited thereto.

In addition, a character "/" in this specification usually indicates an "or" relationship between associated objects. In this application, a term "at least one" may indicate "one" and "two or more". For example, at least one of A, B, and C may indicate the following seven cases: Only A exists, only B exists, only C exists, both A and B exist, both A and C exist, both C and B exist, and A, B, and C all exist. "Installation", "connection", "being connected to", and the like should be understood in a broad sense, for example, may be a fixed connection, a detachable connection, or an integral connection; or may be a direct connection, an indirect connection through an intermediate medium, or internal communication between two elements. In addition, terms "include", "have", and any variant thereof are intended to cover non-exclusive inclusion. For example, a method, system, product, or device that includes a series of steps or units is not necessarily limited to those steps or units expressly listed, but may include other steps or units not expressly listed or inherent to such a process, method, product, or device.

A person of ordinary skill in the art may be aware that units and algorithm steps described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

In the several embodiments provided in this application, it should be understood that the disclosed apparatus and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A test apparatus, used in a performance test for wireless fidelity communication, comprising:
a multi-user module, wherein the multi-user module comprises a processing module, a peripheral component interconnect express PCIE bridge, and a plurality of terminal interfaces, wherein the PICE bridge is used for communication between the processing module and the plurality of terminal interfaces, the PICE bridge is connected to the processing module, the PICE bridge comprises a plurality of branch nodes, and the plurality of branch nodes are connected to the plurality of terminal interfaces in a one-to-one correspondence.

2. The apparatus according to claim 1, wherein
the plurality of terminal interfaces are connected to a plurality of auxiliary terminals in a one-to-one correspondence, a first branch node is configured to control connection and disconnection of a first branch corresponding to the first branch node, the first branch comprises the first branch node, a first terminal interface connected to the first branch node, and a first auxiliary terminal connected to the first terminal interface, wherein the plurality of branch nodes comprise the first branch node, the plurality of terminal interfaces comprise the first terminal interface, and the plurality of auxiliary terminals comprise the first auxiliary terminal.

3. The apparatus according to claim 2, wherein
the plurality of auxiliary terminals are connected to a first combiner, and the first combiner is configured to combine M channels of signals into N channels of signals, wherein M is greater than N, and M and N are positive integers.

4. The apparatus according to claim 3, wherein
the first combiner is connected to a plurality of first attenuators, and attenuation coefficients of the plurality of first attenuators are adjustable.

5. The apparatus according to any one of claims 1 to 4, wherein the apparatus further comprises:
a clock synchronization module, wherein the clock synchronization module is connected to the multi-user module over a wired network.

6. The apparatus according to claim 5, wherein
the clock synchronization module is connected to a to-be-tested terminal over the wired network.

7. The apparatus according to any one of claims 1 to 6, wherein the apparatus further comprises:
a traffic test module, wherein the traffic test module is connected to the multi-user module over the wired network.

8. The apparatus according to claim 7, wherein
the traffic test module comprises a wired interface and a wireless interface, wherein the wired interface is configured to transmit a management packet over the wired network, and the wireless interface is configured to transmit a data packet over a wireless fidelity network.

9. The apparatus according to any one of claims 2 to 8, wherein the apparatus further comprises:
an interference module, wherein the interference module comprises a plurality of interference wireless access points APs, and the plurality of interference APs are configured to perform wireless fidelity communication with the plurality of auxiliary terminals in the multi-user module.

10. The apparatus according to claim 9, wherein
at least one parameter in bandwidths, rates, air interface contention parameters, air interface contention frequencies, channels, or signal strengths of the plurality of interference APs is configurable.

11. The apparatus according to claim 9 or 10, wherein
the plurality of interference APs are connected to a plurality of second attenuators, and attenuation coefficients of the plurality of second attenuators are adjustable.

12. The apparatus according to claim 11, wherein
the plurality of second attenuators are connected to a second combiner, and the second combiner is configured to combine M channels of signals into N channels of signals.

13. The apparatus according to any one of claims 2 to 12, wherein the apparatus further comprises:
a multi-functional module, wherein the multi-functional module comprises a plurality of mesh APs, and the plurality of mesh APs are configured to perform wireless fidelity communication with the plurality of auxiliary terminals in the multi-user module.

14. The apparatus according to claim 13, wherein
the mesh AP is connected to a third attenuator, and an attenuation coefficient of the third attenuator is adjustable.

15. The apparatus according to claim 13 or 14, wherein
the plurality of mesh APs are APs capable of forming a mesh network, and the mesh network is formed by the plurality of mesh APs via a network cable, an optical fiber, or a power line, or through a wireless connection.

16. A performance measurement method, applied to a performance test for wireless fidelity communication, wherein the method comprises:
sending, by a client, a management packet to a server over a wired network, wherein the management packet is used to establish a TCP connection between the client and the server;
sending, by the client, a data packet to the server through an AP; and
measuring, by the server, traffic of the data packet by using a traffic measurement module, wherein the server comprises the traffic measurement module.

17. The method according to claim 16, wherein the method further comprises:
obtaining, by the server, a source IP address and a source port number of the client.

18. The method according to claim 16 or 17, wherein the client and the server comprise a clock synchronization module; and
the method further comprises: synchronizing, by the clock synchronization module, a clock of the server with a clock of the client over the wired network.

19. The method according to claim 18, wherein the method further comprises:
measuring, by the server, a one-way delay of the data packet.

20. A test device, comprising a processor and a transceiver, wherein the transceiver is configured to: receive computer code or instructions and transmit the computer code or the instructions to the processor, and the processor runs the computer code or the instructions, to implement the method according to any one of claims 16 to 19.

21. A computer-readable storage medium, wherein
the computer-readable storage medium stores a computer program, and
when the computer program is run on a computer or a processor, the computer or the processor is enabled to perform the method according to any one of claims 16 to 19.

22. A computer program product, comprising a computer program, wherein when the computer program is executed, the method according to any one of claims 16 to 19 is implemented.
